# EUROPEAN PATENT APPLICATION

(11) **EP 3 112 402 A1**
(43) Date of publication of application: **04.01.2017**
(21) Application number: 14883992.1
(22) Date of filing: 30.05.2014
(51) Int. Cl.: C08J 7/04, C08L 77/00, C08K 5/01

(54) **PAINTED MOLDING ARTICLE**

(30) Priority: 27.02.2014 KR 20140023434
(71) Applicant: Lotte Advanced Materials Co., Ltd., Jeollanam-do 59616 (KR)
(72) Inventor: HONG, Chang Min, Uiwang-si Gyeonggi-do 437-711 (KR); KIM, Doo Young, Uiwang-si Gyeonggi-do 437-711 (KR); CHOI, Wonyoung, Uiwang-si Gyeonggi-do 437-711 (KR); CHO, Jin-Kyung, Uiwang-si Gyeonggi-do 437-711 (KR); KO, Won, Uiwang-si Gyeonggi-do 437-711 (KR); LEE, Jung Hun, Uiwang-si Gyeonggi-do 437-711 (KR)
(74) Representative: Michalski Hüttermann & Partner Patentanwälte mbB
(86) International application number: PCT/KR2014/004856
(87) International publication number: WO 2015/129962

(57) **Abstract**

The present invention relates to a painted molding article in which a paint composition is painted in a molding part formed of an injection molding thermoplastic resin composition, and the injection molding thermoplastic resin composition comprises: (a) a base resin including polyamide (a-1) and polyphenylene ether (a-2); (b) an impact modifier; and (c) a carbon fibril, wherein the polyamide (a-1) forms a matrix phase of the injection molding thermoplastic resin composition, the polyphenylene ether (a-2) and the impact modifier (b) form a domain phase of the injection molding thermoplastic resin composition, the carbon fibril (c) is dispersed on the domain phase and the matrix phase, the content of the carbon fibril (c) dispersed on the matrix phase is higher than the content of the carbon fibril (c) dispersed on the domain phase, and the ratio of weight of the carbon fibril (c) to weight of the polyamide (a-1) may be 0.006 to 0.03.

## Description

### [Technical Field]

The present invention relates to a painted molded article and, more particularly, to a painted molded article including an injection molding thermoplastic resin composition and a paint composition.

### [Background Art]

Plastic materials have various advantages, such as lightness, design flexibility and moldability, despite lower thermal resistance and flame resistance than metals or ceramics, and thus are widely used as industrial materials in a variety of products from daily supplies to industrial fields including automobiles and electric/electronic products.

There are various types of plastic materials from commodity plastics to engineering plastics that are widely used in various fields requiring various functions and performances.

Among these plastic materials, polyphenylene ether has excellent electrical and mechanical properties and high thermal deflection temperature to be used as engineering plastics in various fields.

Polyphenylene ether was developed by General Electric in the U.S.A., and is used in the form of blends with high impact resistance polystyrenes as useful industrial materials, based on excellent thermal resistance thereof. Recently, polyphenylene ether is used in alloy form such as a polyamide/polyphenylene ether resin and a polypropylene/polyphenylene ether obtained by adding a compatibilizer as a third component, followed by reaction extrusion for compatibilization of non-compatible blends through a chemical process.

Particularly, the polyamide/polyphenylene ether can effectively remedy shortcomings of each resin component, thereby exhibiting good balance between thermal resistance, impact resistance and chemical resistance, and is thus employed in exterior components of automobiles, such as a hubcap, a junction box, and the like, and engine compartment components of automobiles.

Recently, there is a need for a plastic material for exterior components which allows on-line electrostatic plating such that electrostatic plating can be simultaneously performed on the plastic material and other metal components. In order to satisfy such a need, a conductive polyamide/polyphenylene ether resin developed by General Electric can be applied to automobile fender components (see EP 685527 B1)

Such a conductive polyamide/polyphenylene ether resin allows plastic exterior components formed of the resin to be subjected to electrostatic painting simultaneously with other metal material components to eliminate a need for an additional painting process, thereby reducing production costs.

In order to impart conductivity to the polyamide/polyphenylene ether resin, addition of conductive fillers such as carbon fibers and carbon black has been proposed (see JP H04-300956 A). However, carbon fibers can cause deterioration in formability and typical carbon black must be added in a large amount in order to achieve conductivity for application to electrostatic plating, thereby causing deterioration in impact resistance and formability.

In order to overcome these problems of impact resistance and formability, nanoscale carbon fibers (carbon fibrils) or conductive carbon black having adjusted size are used (see JP 2756548 B2). However, this method has a problem of deterioration in compatibility of the polyamide/polyphenylene ether resin.

Due to deterioration in compatibility of the polyamide/polyphenylene ether resin, a molded article produced using a polyamide/polyphenylene ether resin has a problem of poor external appearance due to non-uniform painting or low adhesion of paints thereto.

In order to prepare a polyamide/polyphenylene ether resin having excellent physical properties without deterioration in compatibility, it is important to secure efficient compatibilization between a polyphenylene ether, a polyamide, and a compatibilizer upon extrusion.

Therefore, in order to solve the above problems, the inventors carried out studies to develop a conductive polyamide/polyphenylene ether resin, which can maintain excellent inherent properties of the polyamide and the polyphenylene ether and has improved properties and economic feasibility.

### [Disclosure]

### [Technical Problem]

The present invention have been conceived to solve such problems in the related art and it is an aspect of the present invention to provide a painted molded article which has a paint composition uniformly painted on a molded part formed of an injection molding thermoplastic resin composition and exhibits improved adhesion of the paint composition.

It is another aspect of the present invention to provide a painted molded article produced from an injection molding thermoplastic resin composition having excellent properties in terms of impact resistance and conductivity to be applicable to electrostatic painting, particularly, powder painting.

### [Technical Solution]

In accordance with one aspect of the present invention, a painted molded article including a molded part formed of an injection molding thermoplastic resin composition and painted with a paint composition, wherein the injection molding thermoplastic resin composition includes: (a) a base resin including (a-1) a polyamide and (a-2) a polyphenylene ether; (b) an impact modifier; and (c) carbon fibrils, wherein the polyamide (a-1) forms a matrix phase of the injection molding thermoplastic resin composition, the polyphenylene ether (a-2) and the impact modifier (b) form a domain phase of the injection molding thermoplastic resin composition, the carbon fibrils (c) are dispersed in the domain phase and the matrix phase, and the carbon fibrils (c) are dispersed in a higher content in the matrix phase than in the domain phase.

In the injection molding thermoplastic resin composition, a weight ratio of the carbon fibrils (c) to the polyamide (a-1) may range from 0.006 to 0.03.

The injection molding thermoplastic resin composition may include 3 parts by weight to 20 parts by weight of the impact modifier (b) and 0.1 parts by weight to 3.5 parts by weight of the carbon fibrils (c) relative to 100 parts by weight of the base resin (a).

The base resin (a) may include 50 wt% to 90 wt% of the polyamide (a-1) and 10 wt% to 50 wt% of the polyphenylene ether (a-2).

The carbon fibrils (c) may include agglomerates, and the agglomerates may have an average particle size of 30 µm² to 10,000 µm².

The impact modifier (b) may include at least one of (b-1) a styrene-based elastomer and (b-2) an olefin-based elastomer.

The styrene-based elastomer (b-1) may include at least one selected from the group consisting of a block copolymer composed of an aromatic vinyl compound and a conjugated diene compound, a hydrogenated block copolymer obtained by hydrogenation of the block copolymer composed of the aromatic vinyl compound and the conjugated diene compound, a modified block copolymer obtained by modification of the block copolymer with a compound selected from the group consisting of α,β-unsaturated dicarboxylic acids and α,β-unsaturated dicarboxylic acid derivatives, and a modified hydrogenated block copolymer obtained by modification of the hydrogenated block copolymer with a compound selected from among α,β-unsaturated dicarboxylic acids and α,β-unsaturated dicarboxylic acid derivatives.

The olefin-based elastomer (b-2) may include at least one selected from the group consisting of a high density polyethylene, a low density polyethylene, a linear low density polyethylene, and an ethylene-α-olefin copolymer; and a modified high density polyethylene, a modified low density polyethylene, a modified linear low density polyethylene and a modified ethylene-α-olefin copolymer obtained through modification of the high density polyethylene, the low density polyethylene, the linear low density polyethylene and the ethylene-α-olefin copolymer with a compound selected from the group consisting of α,β-unsaturated dicarboxylic acids and α,β-unsaturated dicarboxylic acid derivatives.

The injection molding thermoplastic resin composition may further include (d) a compatibilizer.

The compatibilizer (d) may include at least one selected from the group consisting of maleic acid, maleic anhydride, maleic hydrazide, dichloro maleic anhydride, fumaric acid, unsaturated dicarboxylic acid, citric acid, citric anhydride, malic acid, and agaric acid.

The molded part may be painted with the paint composition by electrostatic painting.

The molded part may be painted with the paint composition by powder painting.

The paint composition may include painting particles.

The painting particles may be liquid-type painting particles.

The painting particles may be solid-type painting particles.

### [Advantageous Effects]

The present invention can provide a painted molded article including a thermoplastic resin composition employing optimal kinds and amounts of a base resin, an impact modifier and carbon fibrils to secure good properties in terms of impact resistance and conductivity.

The present invention can provide a painted molded article including a thermoplastic resin composition having improved conductivity through adjustment of amounts of carbon fibrils dispersed in a matrix phase and domain phases in the thermoplastic resin composition.

The present invention can provide a painted molded article in which a paint composition exhibiting good adhesion to a thermoplastic resin composition is painted to a uniform thickness on a molded part formed of the thermoplastic resin composition, thereby providing good external appearance and aesthetics.

The present invention is not limited to the aforementioned effects, and other effects of the present invention not mentioned herein will become apparent to those skilled in the art from the appended claims.

### [Description of the Drawings]

FIG. 1 is a view illustrating components for automobiles to which a painted molded article according to the present invention is applicable.
FIG. 2 is an enlarged sectional view of a painted molded article according to the present invention.
FIG. 3 is a schematic view of a flat plate for evaluation of adhesive strength of paints to an injection molding thermoplastic resin composition according to the present invention.
   1: automobile
   10, 40: fender
   20, 30: door panel
   41: fuel gate
   50: tail gate
   100: molded part
   200: paint composition

### [Best Mode]

The above and other aspects, features, and advantages of the invention will become apparent from the detailed description of the following embodiments. However, it should be understood that the present invention is not limited to the following embodiments and may be embodied in various ways, and that the embodiments are given to provide complete disclosure of the present invention and to provide a thorough understanding of the present invention to those skilled in the art. The scope of the present invention is limited only by the appended claims and equivalents thereof. Like components will be denoted by like reference numerals throughout the specification.

Unless otherwise defined herein, all terms including technical or scientific terms used herein have the same meanings as commonly understood by those skilled in the art to which the present invention belongs. It will be further understood that terms defined in commonly used dictionaries should not be interpreted in an idealized or overly formal sense unless expressly so defined herein.

Hereinafter, a painted molded article according to the present invention will be described.

A painted molded article according to one embodiment of the present invention includes a paint composition and an injection molding thermoplastic resin composition, wherein the paint composition is attached to at least part of a molded part formed of the injection molding thermoplastic resin composition. Specifically, the molded part formed of the injection molding thermoplastic resin composition may be painted with the paint composition.

Herein, compatibilized blends refer to compositions physically or chemically compatibilized with a compatibilizer.

As used herein, the term "compatibility" means a degree of compatibilization, and a higher compatibility indicates a higher degree of compatibilization and a lower compatibility indicates a lower degree of compatibilization.

### Injection molding thermoplastic resin composition

The injection molding thermoplastic resin composition includes a base resin including a polyamide and a polyphenylene ether, an impact modifier, and carbon fibrils.

Next, each of components of the injection molding thermoplastic resin composition forming the painted molded article according to the embodiment of the invention will be described in more detail.

### (a) Base resin

The base resin (a) may include a polyamide (a-1) and a polyphenylene ether (a-2).

The injection molding thermoplastic resin composition according to the present invention includes a blend of a polyamide and a polyphenylene ether, in which the polyamide can form a matrix phase and the polyphenylene ether can form a domain phase in the matrix phase.

Herein, the matrix phase refers to a continuous phase surrounding dispersed phases and the domain phase refers to a discontinuous phase corresponding to the matrix. The matrix phase and the domain phase may also be referred to as a continuous phase and a dispersed phase, respectively. Herein, the matrix may be used interchangeably with the continuous phase and the domain may be interchangeably used with the dispersed phase.

### (a-1) Polyamide

The polyamide (a-1) is composed of an amino acid, a lactam, a diamine, and a dicarboxylic acid as main monomer components.

Examples of the main monomer components may include amino acids such as 6-aminocapronic acid, 11-aminoundecanoic acid, 12-aminododecanoic acid, p-aminomethyl benzoic acid; lactams such as ε-caprolactam and ω-laurolactam; aliphatic, alicyclic, and aromatic diamines such as tetramethylenediamine, hexamethylenediamine, 2-methylpentamethylenediamine, nonamethylenediamine, undecamethylenediamine, dodecamethylenediamine, 2,2,4-/2,4,4-trimethylhexamethylenediamine, 5-methylnonamethylenediamine, m-xylylenediamine, p-xylylenediamine, 1,3-bis(aminomethyl)cyclohexane, 1,4-bis(aminomethyl)cyclohexane, 1-amino-3-aminomethyl-3,5,5-trimethylcyclohexane, bis(4-aminocyclohexyl)methane, bis(3-methyl-4-aminocyclohexyl)methane, 2,2-bis(4-aminocyclohexyl)propane, bis(aminopropyl)piperazine, and aminoethylpiperazine; and aliphatic, alicyclic, and aromatic dicarboxylic acids such as adipic acid, suberic acid, azelaic acid, sebacic acid, dodecanoic acid, terephthalic acid, isophthalic acid, 2-chloroterephthalic acid, 2-methylterephthalic acid, 5-methylisophthalic acid, 5-sodium sulfoisophthalic acid, 2,6-naphthalene dicarboxylic acid, hexahydroterephthalic acid, hexahydroisophthalic acid, and the like. Polyamide homopolymers or copolymers derived from these materials may be used alone or as a mixture thereof.

Specifically, the polyamide may include at least one selected from the group consisting of polyamide 6, polyamide 66, polyamide 46, polyamide 11, polyamide 12, polyamide 610, polyamide 612, polyamide 6/66, polyamide 6/612, polyamide MXD6, polyamide 6/MXD6, polyamide 66/MXD6, polyamide 6T, polyamide 6I, polyamide 6/6T, polyamide 6/6I, polyamide 66/6T, polyamide 66/6I, polyamide 6/6T/6I, polyamide 66/6T/6I, polyamide 9T, polyamide 9I, polyamide 6/9T, polyamide 6/9I, polyamide 66/9T, polyamide 6/12/9T, polyamide 66/12/9T, polyamide 6/12/9I, polyamide 66/12/6I, and combinations thereof.

The polyamide may have a melting point of 220°C to 360°C, preferably 230°C to 320°C, more preferably 240°C to 300°C.

The polyamide may have a relative viscosity of 2 dl/g or more, preferably about 2 dl/g to 4 dl/g in terms of mechanical strength and heat resistance. Herein, relative viscosity is a value measured at 25°C after adding 1 wt% of the polyamide to m-cresol.

Preferably, the polyamide is present in an amount of 50 wt% to 90 wt%, more preferably 55 wt% to 80 wt%, based on 100 wt% of the base resin including the polyphenylene ether. If the content of the polyamide is not within this range, the thermoplastic resin composition can suffer from deterioration in compatibility, mechanical strength, and heat resistance.

### (a-2) Polyphenylene ether

The polyphenylene ether (a-2) may include at least one selected from the group consisting of a polyphenylene ether polymer, a mixture of the polyphenylene ether polymer and an aromatic vinyl polymer, a modified polyphenylene ether polymer obtained through reaction of the polyphenylene ether polymer with a reactive monomer, and a mixture thereof.

The polyphenylene ether polymer may include at least one selected from the group consisting of poly(2,6-dimethyl-1,4-phenylene) ether, poly(2,6-diethyl-1,4-phenylene) ether, poly(2,6-dipropyl-1,4-phenylene) ether, poly(2-methyl-6-ethyl-1,4-phenylene) ether, poly(2-methyl-6-propyl-1,4-phenylene) ether, poly(2-ethyl-6-propyl-1,4-phenylene) ether, poly(2,6-diphenyl-1,4-phenylene) ether, a copolymer of poly(2,6-dimethyl-1,4-phenylene) ether and poly(2,3,6-trimethyl-1,4-phenylene) ether, a copolymer of poly(2,6-dimethyl-1,4-phenylene) ether and poly(2,3,6-triethyl-1,4-phenylene) ether, and combinations thereof.

Preferably, the polyphenylene ether polymer is poly(2,6-dimethyl-1,4-phenylene) ether or a copolymer of poly(2,6-dimethyl-1,4-phenylene) ether and poly(2,3,6-trimethyl-1,4-phenylene) ether, more preferably poly(2,6-dimethyl-1,4-phenylene) ether.

The aromatic vinyl polymer may include at least one selected from the group consisting of styrene, p-methylstyrene, α-methylstyrene, 4-n-propylstyrene, and combinations thereof, and preferably, styrene, α-methylstyrene, or a combination thereof is used as the aromatic vinyl compound.

The reactive monomer is a compound including an unsaturated carboxylic acid or an anhydride group thereof, or a compound capable of being modified into the unsaturated carboxylic acid or the anhydride group thereof through reaction, and may form a modified polyphenylene ether polymer through reaction with the polyphenylene ether polymer according to one embodiment of the invention.

The reactive monomer may include at least one selected from the group consisting of citric acid, citric anhydride, maleic anhydride, maleic acid, itaconic anhydride, fumaric acid, (meth)acrylic acid, (meth)acrylic acid esters, and combinations thereof, without being limited thereto.

Considering high operation temperature, the modified polyphenylene ether polymer reacted with the reactive monomer can be effectively produced through graft reaction in a melt kneaded state using a phosphite heat stabilizer, without being limited thereto.

The polyphenylene ether according to one embodiment of the invention preferably has an intrinsic viscosity of 0.2 dl/g to 0.8 dl/g, more preferably about 0.3 dl/g to 0.6 dl/g, as measured in chloroform at 25°C.

With the polyphenylene ether having an intrinsic viscosity within this range, the thermoplastic resin composition can exhibit good properties in terms of heat resistance, mechanical strength, and processability

Preferably, the polyphenylene ether is present in an amount of 10 wt% to 50 wt%, more preferably about 20 wt% to 45 wt%, based on 100 wt% of the base resin including the polyamide. If the amount of the polyphenylene ether exceeds this content range, the thermoplastic resin composition can suffer from deterioration in flexibility, chemical resistance, and processability.

### (b) Impact modifier

The impact modifier (b) can improve impact resistance of the thermoplastic resin composition and can form the domain phase.

The impact modifier may include a styrene-based elastomer (b-1), an olefin-based elastomer (b-2), or a combination thereof. The impact modifier is present in an amount of 3 parts by weight to 20 parts by weight, preferably 5 parts by weight to 18 parts by weight, more preferably 6 parts by weight to 15 parts by weight, relative to 100 parts by weight of the base resin.

### (b-1) Styrene-based elastomer

The styrene-based elastomer (b-1) may be selected from among a block copolymer composed of an aromatic vinyl compound and a conjugated diene compound; a hydrogenated block copolymer obtained by hydrogenation of the block copolymer composed of the aromatic vinyl compound and the conjugated diene compound; a modified block copolymer obtained by modification of the block copolymer with a compound selected from the group consisting of α,β-unsaturated dicarboxylic acids and α,β-unsaturated dicarboxylic acid derivatives; and a modified hydrogenated block copolymer obtained by modification of the hydrogenated block copolymer with a compound selected from among α,β-unsaturated dicarboxylic acids and α,β-unsaturated dicarboxylic acid derivatives; and combinations thereof. These may be used alone or in combination thereof.

The aromatic vinyl compound may include at least one selected from the group consisting of styrene, p-methylstyrene, α-methylstyrene, bromostyrene, chlorostyrene, and combinations thereof. Most preferably, the aromatic vinyl compound is styrene.

The styrene-based elastomer is derived from the aromatic vinyl compound, and may include not only linear structures including diblock (A-B block), triblock (A-B-A block), tetrablock (A-B-A-B block) and pentablock (A-B-A-B-A block) structures, but also linear structures containing a total of six A and B blocks or more.

Examples of the styrene-based elastomer may include a styrene-ethylene-butylene-styrene copolymer, a styrene-butadiene-styrene copolymer, a styrene-ethylene-propylene-styrene copolymer, a styrene-isoprene-styrene copolymer, a styrene-ethylene copolymer, and a styrene-ethylene-butadiene-styrene copolymer; and a modified styrene-ethylene-butylene-styrene copolymer, a modified styrene-butadiene-styrene copolymer, a modified styrene-ethylene-propylene-styrene copolymer, a modified styrene-isoprene-styrene copolymer, a modified styrene-ethylene copolymer, and a modified styrene-ethylene-butadiene-styrene copolymer, which are obtained by modification of the above compounds with at least one compound selected from the group consisting of α,β-unsaturated dicarboxylic acids and α,β-unsaturated dicarboxylic acid derivatives. These may be used alone or as a mixture thereof. Most preferably, the styrene-based elastomer is a styrene-ethylene-butylene-styrene copolymer.

### (b-2) Olefin-based elastomer

The olefin-based elastomer (b-2) may be selected from the group consisting of a high density polyethylene, a low density polyethylene, a linear low density polyethylene, an ethylene-α-olefin copolymer, and combinations thereof. Alternatively, the olefin-based elastomer (b-2) may be a modified high density polyethylene, a modified low density polyethylene, a modified linear low density polyethylene and a modified ethylene-α-olefin copolymer obtained through modification of these compounds with a compound selected from the group consisting of α,β-unsaturated dicarboxylic acids and α,β-unsaturated dicarboxylic acid derivatives. These may be used alone or as a mixture.

The olefin-based elastomer may be a copolymer obtained through polymerization of olefin monomers or a copolymer of an olefin monomer and an acrylic monomer.

The olefin monomer may be a C₁ to C₁₉ alkylene, and may be selected from the group consisting of, for example, ethylene, propylene, isopropylene, butylene, isobutylene, octane, and combinations thereof.

The acrylic monomer may be an alkyl (meth)acrylic ester or a (meth)acrylic ester. Here, the alkyl means a C₁ to C₁₀ alkyl, and examples of the alkyl (meth)acrylic ester methyl (meth)acrylate, ethyl (meth)acrylate, propyl (meth)acrylate, and butyl (meth)acrylate. Preferably, methyl (meth)acrylate is used.

Preferably, the olefin-based elastomer includes a reactive group capable of reacting with the polyamide, and may have a structure wherein the reactive group is grafted to a main chain consisting of the copolymer of olefin monomers or the copolymer of the olefin monomer and the acrylic monomer.

As the reactive group, maleic anhydride or an epoxy group is effective.

Examples of the olefin-based elastomer including the reactive group may include maleic anhydride-grafted modified ethylene-α-olefin copolymer or a modified low density polyethylene. The olefin-based elastomer improves compatibility of the polyphenylene ether and the polyamide.

### (c) Carbon fibrils

Carbon fibrils (c) are conductive fillers capable of imparting conductivity to the injection molding thermoplastic resin composition.

The carbon fibrils are a fiber shape carbon material containing 90 wt% or more of carbon. Preferably, the carbon fibrils are carbon nanotubes. The carbon nanotubes have a high aspect ratio and specific surface area, exhibit excellent properties in terms of mechanical properties, electrical properties, and thermal properties, and thus are evaluated as effective materials for engineering plastics.

The carbon nanotubes can be classified into single-wall, double-wall and multi-wall carbon nanotubes according to the number of walls, or can be classified into a zigzag structure, an armchair structure, and a chiral structure according to an angle at which a graphene plane is wrapped. However, it should be understood that various kinds of carbon nanotubes may be used without being limited to the kind and structure of the carbon nanotubes. Preferably, multi-wall carbon nanotubes are used.

The carbon nanotubes may have a diameter of 0.5 nm to 100 nm, preferably 1 nm to 10 nm, and a length of 0.01 µm to 100 µm, preferably 0.5 µm to 10 µm, without being limited thereto. Within these diameter and length ranges, the carbon nanotubes can provide further improved properties to the thermoplastic resin composition in terms of conductivity and processability.

Within these diameter and length ranges, the carbon nanotubes have a high aspect ratio (L/D), and may have an aspect ratio (L/D) of about 100 to about 1,000 to improve conductivity of the thermoplastic resin composition.

The carbon fibrils may include agglomerates, which may have an average particle size of 30 µm² to 10,000 µm², preferably 100 µm² to 8,000 µm².

A post-painting appearance is significantly affected by the average particle size of the agglomerates, and if the average particle size of the carbon fibril agglomerates is not within this range, the carbon fibrils are not sufficiently dispersed in the thermoplastic resin composition and can be observed as surface pits by the naked eye and can cause appearance defect of a molded article produced using the thermoplastic resin composition.

Preferably, the amount of the carbon fibrils dispersed in the matrix phase is greater than the amount of the carbon fibrils dispersed in the domain phases. More preferably, the amount of the carbon fibrils dispersed in the matrix phase ranges from 51 wt% to 100 wt% based on the total amount of the carbon fibrils dispersed in the thermoplastic resin composition.

If the amount of the carbon fibrils dispersed in the domain phases is greater than the amount of the carbon fibrils dispersed in the matrix phase, there can be a problem of deterioration in adhesion of the paint composition upon painting a molded part formed of the thermoplastic resin composition therewith.

The carbon fibrils are present in an amount of 0.1 parts by weight to 3.5 parts by weight, preferably 0.5 parts by weight to 1.5 parts by weight, relative to 100 parts by weight of the base resin. If the amount of the carbon fibrils is less than 0.1 parts by weight, the carbon fibrils provide insignificant improvement in conductivity, and if the amount of the carbon fibrils exceeds 3.5 parts by weight, the carbon fibrils can have a negative influence on external appearance and impact resistance of a molded article produced using the thermoplastic resin composition.

In addition, a weight ratio of the carbon fibrils to the polyamide forming the base resin may range from 0.006 to 0.03, preferably 0.01 to 0.03. If the weight ratio of the carbon fibrils to the polyamide is not within this range, the carbon fibrils are mainly dispersed in the domain phase, thereby causing significant deterioration in conductivity of the thermoplastic resin composition.

### (d) Compatibilizer

The injection molding thermoplastic resin composition may further include a compatibilizer (d).

The compatibilizer (d) may be a compound containing two types of functional groups or a compound capable of being modified by the compound containing two types of functional groups through reaction. One of the functional groups may be a carbon-carbon double bond or a carbon-carbon triple bond, and the other type may be selected from among a carboxyl group, an acid anhydride, an epoxy group, an imide group, an amide group, an ester group, an acid chloride, and functional equivalents thereof.

Examples of the compatibilizer may include maleic acid, maleic anhydride, maleic hydrazide, dichloro maleic anhydride, fumaric acid, unsaturated dicarboxylic acid, citric acid, citric anhydride, malic acid, and agaric acid. These may be used alone or as a mixture thereof.

Preferably, the compatibilizer is maleic acid, maleic anhydride, fumaric acid, citric acid, or citric anhydride, more preferably maleic anhydride or citric anhydride.

The compatibilizer or a modified compound of the compatibilizer generates a polyphenylene ether/polyamide block copolymer through reaction with the polyphenylene ether and the polyamide.

The polyphenylene ether/polyamide block copolymer is distributed at an interface between two components in the thermoplastic resin composition to stabilize morphology of the resin composition. Particularly, in the morphology of the injection molding thermoplastic resin composition in which the polyphenylene ether forms domains phases (dispersed phases) and the polyamide forms the matrix phase (continuous phase), it appears that the polyphenylene ether/polyamide block copolymer plays an important role in regulating the particle diameters of the domains to 1 µm, at which effective impact resistance can be obtained (Polymer Engineering and Science, 1990, vol. 30, No.17, p. 1056-1062).

The compatibilizer may be present in an amount of 0.2 to 10 parts by weight in the injection molding thermoplastic resin composition. If the amount of the compatibilizer is less than 0.2 parts by weight, the compatibilizer can provide insignificant improvement in impact resistance, and if the amount of the compatibilizer exceeds 10 parts by weight, the compatibilizer can deteriorate other physical properties without improvement in impact resistance.

The injection molding thermoplastic resin composition may further include additives such as a flame retardant, a lubricant, a plasticizer, a heat stabilizer, an antioxidant, a photo stabilizer, a colorant, inorganic fillers, and combinations thereof, as needed.

The flame retardant is a material for reducing flammability and may include at least one selected from the group consisting of a phosphate compound, a phosphite compound, a phosphonate compound, a polysiloxane compound, a phosphazene compound, a phosphinate compound, and a melamine compound, without being limited thereto.

The lubricant is a material capable of assisting in flow or movement of the resin composition by lubricating a metal surface contacting the thermoplastic resin composition during machining, molding or extrusion, and may be selected from any typical lubricants used in the art.

The plasticizer is a material capable of improving flexibility, machining workability or expansion of the thermoplastic resin composition and may be selected from any typical lubricants used in the art.

The heat stabilizer is a material capable of suppressing thermal decomposition of the thermoplastic resin composition upon kneading or molding at high temperature, and may be selected from typical lubricants used in the art.

The antioxidant is a material capable of preventing the thermoplastic resin composition from being decomposed and losing inherent properties thereof by suppressing or preventing chemical reaction of the thermoplastic resin composition with oxygen, and may include at least one of phenol, phosphite, thioether and amine antioxidants, without being limited thereto.

The photostabilizer is a material capable of suppressing or preventing color change or loss of mechanical properties of the thermoplastic resin composition due to decomposition of the thermoplastic resin composition by UV light, and may include, for example, titanium oxide.

The colorant may be dyes or pigments.

The additives may be present in an amount of about 0.1 parts by weight to about 10 parts by weight relative to 100 parts by weight of the base resin. If the amount of the additives is not within this range, the injection molding thermoplastic resin composition can suffer from deterioration in mechanical properties and a molded article produced using the injection molding thermoplastic resin composition can have appearance defects.

Although the injection molding thermoplastic resin composition according to the embodiments of the invention can also be prepared by a well-known method in the art, the thermoplastic resin composition having excellent properties can be prepared by adding the aforementioned compounds in specific amounts as the components of the thermoplastic resin composition, and can be prepared in pellet form through melt extrusion in an extruder after mixing the aforementioned compounds and the additives.

The injection molding thermoplastic resin composition having the specific amounts of the components according to the embodiments of the invention has good properties in terms of impact resistance, conductivity and paint adhesion.

### Paint composition

The paint composition may be attached to a portion of a molded part formed of the injection molding thermoplastic resin composition, preferably painted onto the molded part formed of the injection molding thermoplastic resin composition.

The paint composition may be painted onto the molded part formed of the injection molding thermoplastic resin composition by electrostatic painting, in which the paint composition is adhered in mist form onto a painting target by applying voltage to the molded part. Here, the injection molding thermoplastic resin composition exhibits good conductivity, thereby securing good efficiency in electrostatic painting.

Preferably, powder painting is used as electrostatic painting.

The paint composition may include painting particles, which may be liquid-type painting particles or solid-type painting particles.

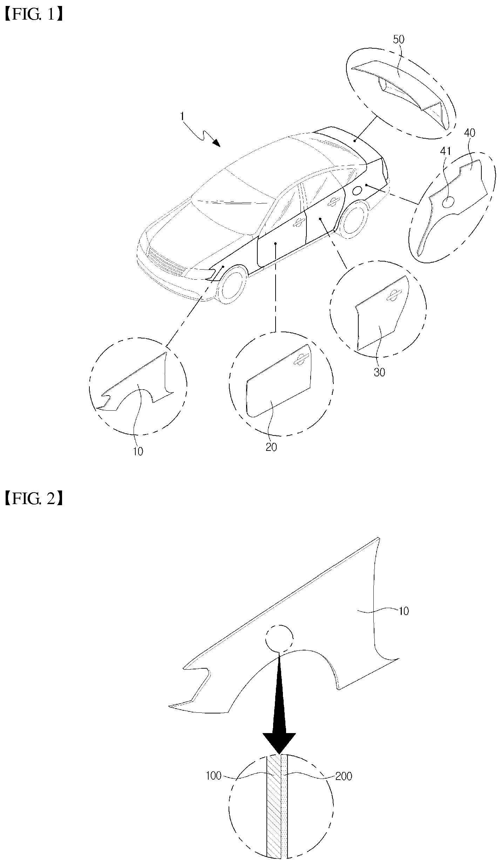

The injection molding thermoplastic resin composition exhibits good conductivity and impact resistance and thus can be applied to automobile components such as a tail gate 50, a fuel gate 41, fenders 10, 40, and door panels 20, 30, as shown in FIG. 1, without being limited thereto.

Each of these articles may be produced by painting a paint composition 200 to a molded part 100 formed of the injection molding thermoplastic resin composition, as shown in FIG. 2, and may be used as an article for automobiles.

### [EXAMPLE]

Next, results of a test for demonstrating advantageous effects of the painted molded article according to the present invention will be shown.

Details of components of thermoplastic resin compositions for injection molding prepared according to the following Examples and Comparative Examples are as follows. Each of the thermoplastic resin compositions for injection molding forms a molded part of the painted molded article.
(a) Base resin
(a-1) Polyamide 66 (VYDYNE 22HSP, Ascend Performance Materials LLC.) was used.
(a-2) Poly(2,6-dimethyl-1,4-phenylene) ether (XYRON S201A, Asahi Kasei Chemicals Corp.) was used.
(b) Impact modifier
(b-1) styrene-based elastomer
   A styrene-ethylene-butylene-styrene copolymer (SEBS) (KRATON G 1651, KRATON Polymers Co., Ltd.) was used.
(b-2) Olefin-based elastomer
   Maleic anhydride modified low density polyethylene was used.
(c) Carbon fibrils
   Carbon nanotubes (NC7000, Nanocyl S.A.) were used.
(c') Carbon black
   Ketjen black (EC-600JD, Akzo Nobel Co., Ltd.) was used.
(d) Compatibilizer
   Citric anhydride (Sigma-Aldrich GmbH) was used.

In preparation of thermoplastic resin compositions of Examples and Comparative Examples, master batches having composition ratios as listed in Table 1 were used. The amounts of carbon fibrils (c) and carbon black (c') are based on 100 parts by weight of the polyamide (a-1).

Components listed in the "main feeding" section of Table 1 were mixed in a dry state and continuously fed into a main feeding port of a twin-screw extruder (TEX-40, JSW Co. Ltd.) at a rate of about 60 kg/hr, followed by melt kneading to prepare a master batch in pellet form.

**Table 1**

| | Component | Preparative Example | |
|---|---|---|---|
| | | MB 1 | MB 2 |
| Main feeding | a-1 | 100 | 100 |
| | c | 10 | - |
| | c' | - | 10 |

The thermoplastic resin compositions of Examples and Comparative Examples were prepared in composition ratios as listed in Table 2. In Table 2, MB indicates a master batch shown in Table 1 and numerical values are weight ratios of the components.

Components listed in the "main feeding" section of Table 2 were mixed in a dry state and continuously fed in a quantitative manner into the main feeding port of the twin-screw extruder (TEX-40, JSW Co. Ltd.). Components listed in the "side feeding" section of Table 2 were continuously fed in a quantitative manner into a side feeding port of the twin-screw extruder, followed by melt kneading. Then, resin compositions were obtained in pellet form through the extruder.

Herein, the side feeding port refers to a port close to a die of the extruder.

**Table 2**

| | Component | Example | | | Comparative Example | | | |
|---|---|---|---|---|---|---|---|---|
| | | 1 | 2 | 3 | 1 | 2 | 3 | 4 |
| Main feeding | a-2 | 40 | 40 | 40 | 40 | 40 | 40 | 40 |
| | b-1 | 6 | 6 | 6 | 6 | 6 | 6 | 6 |
| | b-2 | 5 | 5 | 5 | 5 | 5 | 5 | 5 |
| | d | 0.7 | 0.7 | 0.7 | 0.7 | 0.7 | 0.7 | 0.7 |
| Side | MB 1 | 11.0 | 19.8 | 6.6 | 25.3 | 3.3 | - | - |
| feeding | MB 2 | - | - | - | - | - | 11.0 | 33.0 |
| | a-1 | 50 | 42 | 54 | 37 | 57 | 50 | 30 |

Amounts of components in Examples 1 to 3 and Comparative Examples 1 to 4 in Table 2 and weight ratios of the carbon fibrils (c) and the carbon black (c') to the polyamide (a-1) are shown in Table 3. The amount of each component is represented in parts by weight based on 100 parts by weight of the base resin including the polyamide (a-1) and the polyphenylene ether (a-2).

**Table 3**

| Component | Example | | | Comparative Example | | | |
|---|---|---|---|---|---|---|---|
| | 1 | 2 | 3 | 1 | 2 | 3 | 4 |
| a-1 | 60 | 60 | 60 | 60 | 60 | 60 | 60 |
| a-2 | 40 | 40 | 40 | 40 | 40 | 40 | 40 |
| b-1 | 6 | 6 | 6 | 6 | 6 | 6 | 6 |
| b-2 | 5 | 5 | 5 | 5 | 5 | 5 | 5 |
| c | 1.0 | 1.8 | 0.6 | 2.3 | 0.3 | - | - |
| c' | - | - | - | - | - | 1.0 | 3.0 |
| d | 0.7 | 0.7 | 0.7 | 0.7 | 0.7 | 0.7 | 0.7 |
| c/(a-1) | 0.017 | 0.03 | 0.01 | 0.38 | 0.005 | - | - |
| c'/(a-1) | - | - | - | - | - | 0.017 | 0.05 |

Each of the injection molding thermoplastic resin compositions prepared in Examples 1 to 3 and Comparative Examples 1 to 4 was evaluated as to surface resistance, falling dart impact strength, paint adhesion strength, and surface pits by the following methods. Results are shown in Table 4.

### <Surface resistance>

Specimens for measurement of surface resistance were prepared through thermal compression molding. About 6 g of pellets prepared from each of the thermoplastic resin compositions of Examples 1 to 3 and Comparative Examples 1 to 4 was placed in a mold having a cavity of 100 mm×100 mm×0.5 mm, which in turn was placed between a pair of metal plates and inserted into a thermal compression molding machine set to about 300°C. After application of a pressure of about 50 kg/cm² to the mold and the metal plates for 3 minutes, the mold and the metal plates were removed from the thermal compression molding machine and inserted into a cooling compression molding machine set to about 25°C. After application of a pressure of about 50 kg/cm² to the mold and the metal plates for 2 minutes, the mold and metal plates were removed from the cooling compression molding machine, followed by separation of a specimen for measurement of surface resistance having a size of 100 mm×100 mm×0.5 mm from the mold and the pair of metal plates. The compression molded specimen was left under conditions of about 23°C/50% RH for about 6 hours.

Surface resistance of each of the thermoplastic resin compositions of Examples 1 to 3 and Comparative Examples 1 to 4 was measured using a resistance measurement system Hiresta-UP MCP-HT450 provided with a probe MCP-HTP14 (Mitsubishi Chemical Analytech Co.), and a voltage of 250 V was applied for 30 seconds upon measurement.

### <Falling dart impact strength>

Falling dart impact strength of each of the thermoplastic resin compositions was measured on a specimen prepared by injection molding. The specimen was prepared at a cylinder temperature of about 280°C and a mold temperature of about 80°C using an injection molding machine including a mold having a specimen cavity (about 100 mm×100 mmx3 mm) (SELEX-TX150, Woojin Selex Co., Ltd.).

The resin compositions of Examples 1 to 3 and Comparative Examples 1 to 4 were subjected to injection molding under conditions of an injection pressure of about 100 MPa, a pressure holding time of about 5 sec, and a cooling time of about 20 sec, thereby preparing 20 specimens for each of the resin compositions. The prepared specimens were left under conditions of about 23°C/50% RH for about 6 hours.

Falling dart impact strength was measured on the obtained specimen by measuring total energy (J) of falling dart impact strength at about 23°C/50% RH using a falling dart impact strength tester (Fractovis Plus, CEAST Co., Ltd.) in accordance with ASTM D3763.

A head dart having a diameter of 12.7 mm and adjusted to a weight of 1 kg to 10 kg depending upon impact strength of each of the resin compositions was dropped onto the specimen from a height of 1 m, followed by measuring fracture energy of the specimen using a measuring instrument connected to the falling dart impact strength tester. For each of the resin compositions, fracture energy values were measured 20 times and averaged to obtain falling dart impact strength of each of the resin compositions.

### <Evaluation of paint adhesive strength>

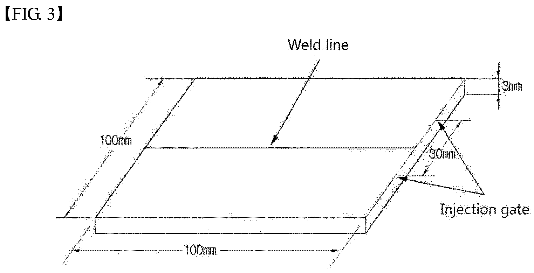

Paint adhesive strength was evaluated using a flat plate (about 100 mm×100 mmx3 mm) provided with two injection gates placed on the same side surface and separated from each other by a distance of 30 mm (see FIG. 3). The injection molded flat plate was subjected to powder painting with polyester-epoxy hybrid powder (available from Kansai Paint Co., LTd.) using an electrostatic painting system, followed by curing at 200°C for about 40 minutes, thereby forming a painted molded article.

Paint adhesive strength of the painted molded article was measured by a cross-cut method in accordance with JIS K5400-8.5. Cutting lines of a lattice shape were formed in a weld line portion and in a non-weld line portion on the surface of the painted molded article using a suitable member, such as a cutting knife, followed by rubbing the cutting line region with an eraser 5 times in a diagonal direction with respect to the cutting lines. Thereafter, Permacel Tape was attached to and removed from the cutting line region of the specimen, which in turn was observed through a magnifying lens, and the number of detached lattices was rated in accordance with JIS K5400-8.5 in order to evaluate adhesive strength of the paint. A higher value represents better paint adhesive strength.

### <Evaluation of surface pit>

Surface pits are fine dimples formed on the surface of a molded article formed of an injection molding thermoplastic resin composition and can cause white and turbid surface defects. Surface pits formed on a specimen of the thermoplastic resin composition through injection molding using a flat plate (100 mm×100 mmx3 mm) provided with two injection gates placed on the same side surface and separated from each other by a distance of 30 mm. Formation of no surface pit was rated as G (Good) and formation of surface pits was rated as NG (Not Good).

**Table 4**

| | | Example | | | Comparative Example | | | |
|---|---|---|---|---|---|---|---|---|
| | | 1 | 2 | 3 | 1 | 2 | 3 | 4 |
| Surface resistance (Ω/□) | | 104.2 | 102.8 | 105.5 | 101.7 | 109.2 | 109.7 | 104.1 |
| Falling dart impact strength (J) | | 45 | 38 | 49 | 32 | 55 | 44 | 28 |
| Non-weld line portion | Paint adhesive strength | 10 | 10 | 10 | 10 | 8 | 6 | 10 |
| | Surface pit | G | G | G | G | G | G | G |
| Weld line portion | Paint adhesive strength | 10 | 10 | 10 | 10 | 6 | 4 | 10 |
| | Surface pit | G | G | G | NG | G | G | NG |

From Tables 1 to 4, it can be seen that the molded articles produced using the thermoplastic resin compositions of Examples 1 to 3 had good properties in terms of conductivity, impact resistance, and paint adhesion.

The thermoplastic resin composition of Comparative Example 1, in which the weight ratio of the carbon fibrils to the polyamide exceeded 0.03, suffered from significant deterioration in conductivity due to significant deterioration in surface resistance and generated surface pits.

The thermoplastic resin composition of Comparative Example 2, in which the weight ratio of the carbon fibrils to the polyamide was less than 0.006, suffered from deterioration in paint adhesion.

Not only did the thermoplastic resin compositions of Comparative Examples 3 and 4, in which carbon black was used as the conductive filler, have lower impact resistance than the thermoplastic resin compositions of Examples, but also suffered from surface defects due to formation of surface pits in the weld line portion (Comparative Example 4) and poor paint adhesion due to significant deterioration in paint adhesive strength (Comparative Example 3).

Through these experiments, it could be seen that the kind and amounts of components of the injection molding thermoplastic resin composition could significantly affect conductivity, impact resistance, paint adhesion and external appearance of a painted molded article produced using the thermoplastic resin composition.

It should be understood that the present invention is not limited to the above embodiments and can be realized in various ways without departing from the appended claims. It should be understood that various modifications, changes, and alterations can be made by those skilled in the art without departing from the spirit and scope of the present invention, as defined by the appended claims and equivalents thereof.

### [Industrial Applicability]

The injection molding thermoplastic resin composition according to the present invention exhibits good properties in terms of impact resistance and conductivity to be advantageously applied to electrostatic painting and allows a paint composition to be uniformly coated onto a molded article formed of the thermoplastic resin composition so as to secure a good external appearance of the molded article through improvement of paint adhesion.

## Claims

1. A painted molded article including a molded part formed of an injection molding thermoplastic resin composition and painted with a paint composition, the injection molding thermoplastic resin composition comprising: (a) a base resin comprising (a-1) a polyamide and (a-2) a polyphenylene ether; (b) an impact modifier; and (c) carbon fibrils,
wherein the polyamide (a-1) forms a matrix phase of the injection molding thermoplastic resin composition, the polyphenylene ether (a-2) and the impact modifier (b) form a domain phase of the injection molding thermoplastic resin composition, the carbon fibrils (c) are dispersed in the domain phase and the matrix phase, the carbon fibrils (c) being dispersed in a higher content in the matrix phase than in the domain phase, and a weight ratio of the carbon fibrils (c) to the polyamide (a-1) ranges from 0.006 to 0.03.

2. The painted molded article according to claim 1, wherein the injection molding thermoplastic resin composition comprises 3 parts by weight to 20 parts by weight of the impact modifier (b) and 0.1 parts by weight to 3.5 parts by weight of the carbon fibrils (c) relative to 100 parts by weight of the base resin (a).

3. The painted molded article according to claim 2, wherein the base resin (a) comprises 50 wt% to 90 wt% of the polyamide (a-1) and 10 wt% to 50 wt% of the polyphenylene ether (a-2).

4. The painted molded article according to claim 1, wherein the carbon fibrils (c) comprise agglomerates, the agglomerates having an average particle size of 30 µm² to 10,000 µm².

5. The painted molded article according to claim 1, wherein the impact modifier (b) comprises at least one of (b-1) a styrene-based elastomer and (b-2) an olefin-based elastomer.

6. The painted molded article according to claim 5, wherein the styrene-based elastomer (b-1) comprises at least one selected from the group consisting of a block copolymer composed of an aromatic vinyl compound and a conjugated diene compound, a hydrogenated block copolymer obtained by hydrogenation of the block copolymer composed of the aromatic vinyl compound and the conjugated diene compound, a modified block copolymer obtained by modification of the block copolymer with a compound selected from the group consisting of α,β-unsaturated dicarboxylic acids and α,β-unsaturated dicarboxylic acid derivatives, and a modified hydrogenated block copolymer obtained by modification of the hydrogenated block copolymer with a compound selected from among α,β-unsaturated dicarboxylic acids and α,β-unsaturated dicarboxylic acid derivatives.

7. The painted molded article according to claim 5, wherein the olefin-based elastomer (b-2) comprises at least one selected from the group consisting of a high density polyethylene, a low density polyethylene, a linear low density polyethylene, and an ethylene-α-olefin copolymer; and a modified high density polyethylene, a modified low density polyethylene, a modified linear low density polyethylene, and a modified ethylene-α-olefin copolymer obtained through modification of the high density polyethylene, the low density polyethylene, the linear low density polyethylene and the ethylene-α-olefin copolymer with a compound selected from the group consisting of α,β-unsaturated dicarboxylic acids and α,β-unsaturated dicarboxylic acid derivatives.

8. The painted molded article according to claim 1, wherein the injection molding thermoplastic resin composition further comprises (d) a compatibilizer.

9. The painted molded article according to claim 8, wherein the compatibilizer (d) comprises at least one selected from the group consisting of maleic acid, maleic anhydride, maleic hydrazide, dichloro maleic anhydride, fumaric acid, unsaturated dicarboxylic acid, citric acid, citric anhydride, malic acid, and agaric acid.

10. The painted molded article according to claim 1, wherein the molded part is painted with the paint composition by electrostatic painting.

11. The painted molded article according to claim 1, wherein the molded part is painted with the paint composition by powder painting.

12. The painted molded article according to claim 1, wherein the paint composition comprises painting particles.

13. The painted molded article according to claim 12, wherein the painting particles is liquid-type painting particles.

14. The painted molded article according to claim 12, wherein the painting particles is solid-type painting particles.
